# EUROPÄISCHE PATENTSCHRIFT

(11) **EP 1 615 810 B1**
(45) Veröffentlichungstag und Bekanntmachung des Hinweises auf die Patenterteilung: **16.08.2006**
(21) Anmeldenummer: 04724546.9
(22) Anmeldetag: 31.03.2004
(51) Int. Cl.: B60R 22/34

(54) **GURTAUFROLLER MIT ZWEISTUFIGER KRAFTBEGRENZUNGSEINRICHTUNG**
SEAT-BELT RETRACTOR COMPRISING A DUAL-PHASE FORCE LIMITING DEVICE
RETRACTEUR DE CEINTURE DE SECURITE COMPORTANT UN DISPOSITIF DE LIMITATION DE FORCE

(30) Priorität: 17.04.2003 DE 10317713
(43) Veröffentlichungstag der Anmeldung: 18.01.2006
(73) Patentinhaber: AUTOLIV DEVELOPMENT AB, 447 83 Vargarda (SE)
(72) Erfinder: SCHNEIDER, Thomas, 25813 Husum (DE); LÖFFLER, Kai, 25469 Halstenbek (DE); FREY, Erne, 25335 Elmshorn (DE)
(74) Vertreter: Müller, Karl-Ernst
(86) Internationale Anmeldenummer: PCT/EP2004/003374
(87) Internationale Veröffentlichungsnummer: WO 2004/091984

(56) Entgegenhaltungen:
- US-A- 6 113 022
- US-A1- 2002 066 817

## Beschreibung

Die Erfindung betrifft einen selbstsperrenden Gurtaufroller mit einer fahrzeugsensitiv und/oder gurtbandsensitiv ansteuerbaren Blockiervorrichtung mit den Merkmalen des Oberbegriffs von Anspruch 1.

Ein Gurtaufroller mit den vorgenannten Merkmalen ist in der US 6 113 022 A beschrieben. Bei dem bekannten Gurtaufroller ist zusätzlich zu der aus einem Torsionsstab bestehenden ersten Kraftbegrenzungseinrichtung eine zweite Kraftbegrenzungseinrichtung eingerichtet, die nach einem vorgegebenen Drehweg der Gurtwelle gegenüber dem durch die Blockiereinrichtung des Gurtaufrollers blockierten Profilkopf, währenddessen lediglich der Torsionsstab als erste Kraftbegrenzungseinrichtung wirksam ist, in Funktion kommt. Hierzu ist in einer in der zugeordneten Stirnwand der Gurtwelle ausgebildeten Vertiefung ein zusätzliches Kraftbegrenzungsglied angeordnet, welches mit einem Vorsprung in einen in dem Profilkopf ausgebildeten Schlitz eingreift. Die Gurtwelle weist hierbei einen einspringenden Mitnehmeransatz auf, der nach dem entsprechend vorgegebenen Drehweg in Kontakt mit dem Vorsprung des Kraftbegrenzungsgliedes kommt und dieses insoweit bei der Weiterdrehung der Gurtwelle mitnimmt. Um über die Wirkung des Torsionsstabes hinaus eine zusätzliche Kraftbegrenzungswirkung zu erzielen, ist insbesondere der in dem Profilkopf ausgebildete Schlitz gegen Ende des Drehweges mit einer geringeren Abmessung als die Abmessung des Vorsprunges des Deformationsgliedes ausgelegt, so dass sich der Vorsprung des Deformationsgliedes bei der Weiterdrehung der Gurtwelle durch den verengten Teil des Schlitzes hindurchdrängen muss und diesen aufweitet.

Der Erfindung liegt daher die Aufgabe zugrunde, einen Gurtaufroller mit den gattungsgemäßen Merkmalen derart zu verbessern, daß die Anordnung eines zusätzlichen Deformationsgliedes ohne konstruktive Restriktion in einfacher Weise zu verwirklichen ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind..

Die Erfindung sieht in ihrem Grundgedanken vor, dass der Kraftbegrenzerring an der zugeordneten Stirnseite der Gurtwelle lösbar festgelegt ist und sich durch Anlage seines Anschlages an dem Gegenanschlag des Profilkopfes von der Gurtwelle löst, und dass die Deformationseinrichtung als sich während der Relativdrehung von Gurtwelle zum Kraftbegrenzerring zwischen dem Kraftbegrenzerring und der Gurtwelle abstützendes Deformationsglied ausgebildet ist. Mit der Erfindung ist der Vorteil verbunden, dass die zweite, zusätzlich zu dem Torsionsstab wirksamen Kraftbegrenzungseinrichtung lediglich durch die Zwischenschaltung des Kraftbegrenzerringes zwischen dem Profilkopf und der Gurtwelle verwirklicht werden kann, so dass auch ein wahlweiser Einsatz der zweiten Kraftbegrenzungseinrichtung in Form des zusätzlichen Kraftbegrenzerrings ermöglicht ist. Die Bearbeitung der Gurtwelle wie auch des Profilkopfes ist dabei einfacher ausgeführt.

Nach einem Ausführungsbeispiel der Erfindung ist vorgesehen, daß als Deformationsglied an dem Kraftbegrenzerring ein nach innen zur Gurtwelle abstehender und während der Verbindung von Gurtwelle und Kraftbegrenzerring in einer am Umfang der Gurtwelle ausgebildeten Tasche aufgenommener Klemmfuß angeordnet ist. In einer Umkehrung kann alternativ vorgesehen sein, daß als Deformationsglied an der Gurtwelle ein nach außen zum Kraftbegrenzerring abstehender und während der Verbindung von Gurtwelle und Kraftbegrenzerring in einer an dem Kraftbegrenzerring ausgebildeten Tasche aufgenommener Klemmfuß angeordnet ist.

Hinsichtlich der Anordnung des Kraftbegrenzerringes kann vorgesehen sein, daß der Kraftbegrenzerring formschlüssig auf einem stirnseitig an der Gurtwelle ausgebildeten Absatz aufgesetzt ist und die axiale Umfangsfläche des Absatzes die Gegenfläche für den Durchgang des Klemmfußes bildet.

Soweit zum Aufbringen der erforderlichen Kraftbegrenzung ausgeschlossen sein muß, daß beim Durchgang des Klemmfußes zwischen der Gurtwelle und den Kraftbegrenzerring letzterer radial ausweicht, ist nach einem Ausführungsbeispiel der Erfindung vorgesehen, daß der Kraftbegrenzerring aus einem unnachgiebigen Material besteht und derart stabil ausgebildet ist, daß der Kraftbegrenzerring das Widerlager für die beim Durchgang des Klemmfußes auftretende Kraft bildet. Alternativ kann vorgesehen sein, daß der Profilkopf den Kraftbegrenzerring mit einem axialen Wandabschnitt übergreift und dadurch das Widerlager für die beim Durchgang des Klemmfußes aufgetretende Kraft bildet.

Hinsichtlich der Ausbildung des als Klemmfuß wirkenden Deformationsgliedes kann in einer besonders zweckmäßigen Weise vorgesehen sein, daß der Klemmfuß als sich in Umfangsrichtung erstreckende Zunge ausgebildet ist, die nach ihrem Herausrutschen aus der Tasche sich radial gegen den Kraftbegrenzerring abstützt.

Soweit der Erfindungsgedanke auch mit einem einzigen Deformationsglied bzw. Klemmfuß zu verwirklichen ist, ist nach Ausführungsbeispielen der Erfindung vorgesehen, daß in symmetrischer Anordnung zwei einander gegenüberliegende Klemmfüße vorgesehen sind oder auch eine Mehrzahl von Klemmfüßen vorgesehen ist.

Der vor dem Wirksamwerden der Kraftbegrenzung an der Gurtwelle festzulegende Kraftbegrenzerring kann mit der Gurtwelle lösbar verstemmt oder aber mit dieser über Sollbruchstellen verbunden sein; auch andere konstruktive Ausbildungen sind möglich.

In einer Weiterbildung der Erfindung kann vorgesehen sein, daß zwischen dem Profilkopf und dem Kraftbegrenzerring zur Einstellung des Anschlagdrehwinkels ein Übertragungsring angeordnet ist, der eine zum Profilkopf abgewinkelte und in der eingestellten Lage mit dem Gegenanschlag des Profilkopfes zusammenwirkende Anschlagnase und eine zum Kraftbegrenzerring abgewinkelte und mit dem Anschlag des Kraftbegrenzerrings zusammenwirkende Anschlagnase aufweist.

In der Zeichnung sind Ausführungsbeispiele der Erfindung wiedergegeben, welche nachstehend beschrieben sind. Es zeigen:
- Fig. 1: Die Gurtwelle eines Gurtaufrollers mit angeschlossener Kraftbegrenzungseinrichtung in einer auseinandergezogenen Darstellung,
- Fig. 2: den Gegenstand der Fig. 1 in einer anderen Ausführungsform.

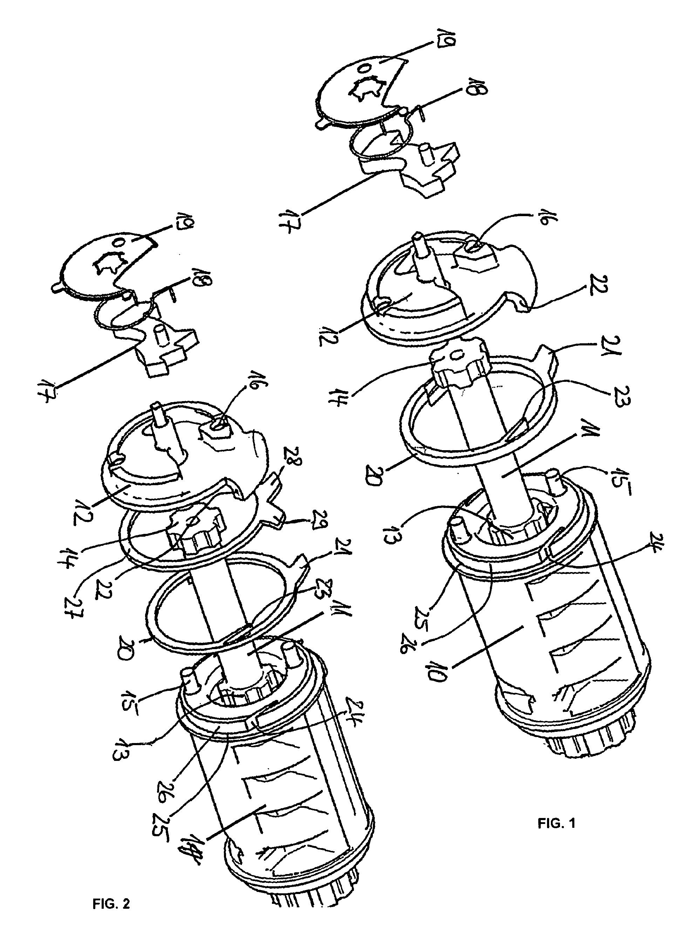

Die aus Figur 1 ersichtliche Anordnung einer Gurtwelle 10 mit Torsionsstab 11 und Profilkopf 12 ist Bestandteil eines selbstsperrenden Gurtaufrollers, wie dieser in seiner Funktion im einzelnen in der gattungsbildenden WO96/32303 beschrieben ist, so daß insoweit auf die gattungsbildende Druckschrift Bezug genommen ist. Bei den in der Zeichnung dargestellten Ausführungsbeispielen der vorliegenden Erfindung ist eine erste Kraftbegrenzungseinrichtung dadurch gebildet, daß der Torsionsstab 11 mit seinem einen Ende 13 formschlüssig an die Gurtwelle 10 angeschlossen ist, während sein gegenüberliegendes und aus der Gurtwelle 10 herausragendes Ende 14 ebenfalls drehfest mit dem Profilkopf 12 verbunden ist. Kommt es im Verlaufe des Ansprechens des Blockiersystems des Gurtaufrollers zu einer Blockierung des Profilkopfes 12 beispielsweise durch die über die Trägheitsmasse 19 mit G-Wertfeder 18 ausgesteuerte Sperrklinke 17, so führt ein weiterhin an der Gurtwelle angreifender Gurtbandzug zu dem Bestreben der Gurtwelle 10 sich weiterzudrehen, so daß über diese Relativbewegung der Torsionsstab beansprucht wird. Die Ansprechschwelle für den Torsionsstab ist dabei dadurch verwirklicht, daß an der Stirnseite der Gurtwelle 10 angeordnete Sollbruchzapfen 15 in entsprechend in dem Profilkopf 12 vorgesehene Ausnehmungen 16 eingreifen, die bei entsprechender Kraftbeanspruchung wegbrechen und so die Relativdrehung der Gurtwelle 10 zum Profilkopf 12 freigeben.

Zwischen der Stirnseite der Gurtwelle 10 und dem Profilkopf 12 ist ein Kraftbegrenzerring 20 angeordnet, der einen radial davon abstehenden Anschlag 21 aufweist, der - wie noch zu beschreiben sein wird - nach Verdrehung des Kraftbegrenzerringes 20 gegenüber dem Profilkopf 12 in Anlage an einem an dem Profilkopf 12 ausgebildeten Gegenanschlag 22 in Anlage kommt, so daß bei durch die Sperrklinke 17 blockierten Profilkopf 12 der Kraftbegrenzerring 20 ebenfalls in seiner weiteren Drehung angehalten ist. Hierzu ist der an dem Profilkopf ausgebildete Gegenanschlag 22 zum Kraftbegrenzerring 20 axial hin abgewinkelt, so daß der Gegenanschlag 22 in die Bewegungsbahn des Anschlages 21 des Kraftbegrenzerringes 20 hineinragt. Der Kraftbegrenzerring 20 ist auf einem an der Stirnseite der Gurtwelle 10 ausgebildeten Absatz 25 angeordnet und umgreift formschlüssig eine Umfangsfläche 26 des Absatzes 25, wobei die Anordnung derart ist, daß der Kraftbegrenzerring 20 die Außenkontur der Gurtwelle 10 nicht überragt.

Zur Erzeugung der gewünschten Kraftbegrenzungskraft sind an der Innenseite des Kraftbegrenzerrings 20 einander gegenüberliegend zwei Klemmfüße 23 in Form von sich in Umfangsrichtung erstreckenden, nach innen zur Gurtwelle 10 abstehenden Zungen ausgebildet, die in der Ruhestellung in in dem Absatz 25 der Gurtwelle 10 bzw. in dessen Umfangsfläche 26 angeordneten Taschen 24 aufgenommen sind.

Kommt es zu einem Ansprechen der Blockiervorrichtung mit einer gehäusefesten Verriegelung des Profilkopfes 12 mittels der Sperrklinke 17, so führt ein weiterer Zug am Gurtband durch den sich vorverlagernden Insassen zu einer Drehung der Gurtwelle entgegen dem Uhrzeigersinn; da zunächst der Kraftbegrenzerring 20 mit der Gurtwelle 10 verbunden ist, dreht sich der Kraftbegrenzerring 20 entgegen dem Uhrzeigersinn mit der Gurtwelle 10 mit, bis der Anschlag 21 an dem Gegenanschlag 22 des Profilkopfes in Anlage kommt, so daß der Kraftbegrenzerring 20 festgelegt ist. Während dieses Bewegungsablaufes entsteht eine Kraftbegrenzungskraft durch die Verdrillung des Torsionsstabes 11, der mit dem Ende 13 an der Gurtwelle festgelegt und mit dem anderen Ende 14 am blockierten Profilkopf 12 befestigt ist.

Im Anschluß an das Festlegen des Kraftbegrenzerringes 20 an dem blockierten Profilkopf 12 führt eine Weiterdrehung der Gurtwelle entgegen dem Uhrzeigersinn dazu, daß nun eine Relativbewegung der Gurtwelle 10 zu dem festgelegten Kraftbegrenzerring 20 sich ergibt, wobei sich die Taschen 24 von den Klemmfüßen 23 wegbewegen, so daß die Klemmfüße 23 zwischen der Innenfläche des Kraftbegrenzerringes 20 und der Umfangsfläche 26 des Absatzes 25 der Gurtwelle 10 hindurchgezwängt werden müssen. Da bei dem dargestellten Ausführungsbeispiel der Kraftbegrenzerring derart stabil ausgeführt ist, daß ein radiales Ausweichen nicht ermöglicht ist, wird über den Durchgang der Klemmfüße 23 über die Umfangsfläche 26 des Absatzes 25 die gewünschte Erhöhung der Kraftbegrenzerkraft bewirkt. Diese Krafterhöhung bleibt über die gesamte weitere Drehung der Gurtwelle 10 in Gurtauszugsrichtung, d. h. entgegen dem Uhrzeigersinn, erhalten, ohne daß eine konstruktive Begrenzung gegeben ist.

Das in Figur 2 dargestellte Ausführungsbeispiel unterscheidet sich von dem zuvor beschriebenen Ausführungsbeispiel dadurch, daß zwischen dem Kraftbegrenzerring 20 und dem Profilkopf 12 noch ein Übertragungsring 27 eingeschaltet ist, mittels dessen das Ansprechen des Kraftbegrenzerringes 20 verzögert werden kann. Hierzu weist der Übertragungsring 27 einerseits eine zum Profilkopf 12 bzw. dessen Gegenanschlag 22 abgewinkelte Anschlagnase 28 auf und ferner eine zum Kraftbegrenzerring 20 bzw. dessen Anschlag 21 hin abgewinkelte Anschlagnase 29. Der Übertragungsring 27 ist gemeinsam mit dem Kraftbegrenzerring 20 an der Stirnseite der Gurtwelle 10 bzw. auf deren Absatz 25 festgelegt.

Kommt es nun zu einer Blockierung des Profilkopfes 12 so dreht sich zunächst die Gurtwelle 10 bei entsprechend einwirkender Belastung in Gurtauszugsrichtung (entgegen dem Uhrzeigersinn) weiter, bis die Anschlagnase 28 des Übertragungsringes 27 in Anlage an dem Gegenanschlag 22 des Profilkopfes 12 kommt. In dieser ersten Zwischenstellung wird der Übertragungsring 27 in seiner weiteren Drehbewegung festgelegt, und löst sich somit von dem Kraftbegrenzerring 20, der seinerseits sich mit der Gurtwelle 10 weiterdreht, bis der Anschlag 21 des Kraftbegrenzerringes 20 an der Anschlagnase 29 des in der Blockierstellung vorhandenen Übertragungsringes 27 in Anlage kommt, so daß nun der Kraftbegrenzerring 20 festgelegt ist. Im Anschluß daran kommt es zu der beschriebenen und die Kraftbegrenzerkraft bewirkenden Relativdrehung zwischen der Gurtwelle 10 und dem festliegenden Kraftbegrenzerring 20.

## Patentansprüche

1. Selbstsperrender Gurtaufroller mit einer fahrzeugsensitiv und/oder gurtbandsensitiv ansteuerbaren Blockiervorrichtung, wobei der Gurtaufroller eine erste Kraftbegrenzungseinrichtung mit einem einerseits mit der Gurtwelle (10) und andererseits mit einem gesonderten, mittels eines ansteuerbaren Sperrgliedes (17) gehäusefest zu blockierenden Profilkopf (12) verbundenen Torsionsstab (11) aufweist, und wobei als ein zusätzliches Kraftbegrenzungselement zur Erhöhung der Rückhaltekraft vor und/oder während des Wirksamwerdens des Torsionsstabes (11) zwischen der Gurtwelle (10) und dem Profilkopf (12) ein drehbar angeordneter Kraftbegrenzerring (20) eingeschaltet ist, der mit einem Anschlag (21) nach einem durch dessen Lage vorbestimmten Drehwinkel in Anlage an einem Gegenanschlag (22) des in der Blockierstellung befindlichen Profilkopfes (12) kommt, **dadurch gekennzeichnet, daß** der Kraftbegrenzerring (20) an der zugeordneten Stirnseite der Gurtwelle (10) lösbar festgelegt ist und sich durch Anlage seines Anschlages (21) an dem Gegenanschlag (22) des Profilkopfes (12) von der Gurtwelle (10) löst, und dass an dem Kraftbegrenzerring (20) und/oder der Gurtwelle (10) wenigstens ein bei der Relativdrehung von Gurtwelle (10) zum Kraftbegrenzerring (20) wirksam werdendes, sich zwischen dem Kraftbegrenzerring (20) und der Gurtwelle (10) abstützendes Deformationsglied (23) angeordnet ist.

2. Gurtaufroller nach Anspruch 1, **dadurch gekennzeichnet, daß** als Deformationsglied an dem Kraftbegrenzerring (20) ein nach innen zur Gurtwelle (10) abstehender und während der Verbindung von Gurtwelle (10) und Kraftbegrenzerring (20) in einer am Umfang der Gurtwelle (10) ausgebildeten Tasche (24) aufgenommener Klemmfuß (23) angeordnet ist.

3. Gurtaufroller nach Anspruch 1, **dadurch gekennzeichnet, daß** als Deformationsglied an der Gurtwelle (10) ein nach außen zum Kraftbegrenzerring (20) abstehender und während der Verbindung von Gurtwelle (10) und Kraftbegrenzerring (20) in einer an dem Kraftbegrenzerring (20) ausgebildeten Tasche aufgenommener Klemmfuß angeordnet ist.

4. Gurtaufroller nach einem der Ansprüche 1 bis 3, **dadurch gekennzeichnet, daß** der Kraftbegrenzerring (20) formschlüssig auf einem stirnseitig an der Gurtwelle (10) ausgebildeten Absatz (25) aufgesetzt ist und die axiale Umfangsfläche (26) des Absatzes (25) die Gegenfläche für den Durchgang des Klemmfußes (23) bildet.

5. Gurtaufroller nach Anspruch 4, **dadurch gekennzeichnet, daß** der Kraftbegrenzerring aus einem unnachgiebigen Material besteht und derart stabil ausgebildet ist, daß der Kraftbegrenzerring (20) das Widerlager für die beim Durchgang des Klemmfußes (23) auftretende Kraft bildet.

6. Gurtaufroller nach Anspruch 4, **dadurch gekennzeichnet, daß** der Profilkopf (12) den Kraftbegrenzerring (20) mit einem axialen Wandabschnitt übergreift und dadurch das Widerlager für die beim Durchgang des Klemmfußes aufgetretende Kraft bildet.

7. Gurtaufroller nach einem der Ansprüche 4 bis 6, **dadurch gekennzeichnet, daß** der Klemmfuß (23) als sich in Umfangsrichtung erstreckende Zunge ausgebildet ist, die nach ihrem Herausrutschen aus der Tasche (24) sich radial gegen den Kraftbegrenzerring (20) abstützt.

8. Gurtaufroller nach einem der Ansprüche 4 bis 7, **dadurch gekennzeichnet, daß** in symmetrischer Anordnung zwei einander gegenüberliegende Klemmfüße (23) angeordnet sind.

9. Gurtaufroller nach einem der Ansprüche 4 bis 7, **dadurch gekennzeichnet, daß** in symmetrischer Anordnung eine Mehrzahl von Klemmfüßen vorgesehen ist.

10. Gurtaufroller nach einem der Ansprüche 1 bis 9, **dadurch gekennzeichnet, daß** der Kraftbegrenzerring (20) mit der Gurtwelle (10) lösbar verstemmt ist.

11. Gurtaufroller nach einem der Ansprüche 1 bis 9, **dadurch gekennzeichnet, daß** der Kraftbegrenzerring (20) mit der Gurtwelle (10) über Sollbruchstellen verbunden ist.

12. Gurtaufroller nach einem der Ansprüche 1 bis 11, **dadurch gekennzeichnet, daß** zwischen dem Profilkopf (12) und dem Kraftbegrenzerring (20) zur Einstellung des Anschlagdrehwinkels ein Übertragungsring (27) angeordnet ist, der eine zum Profilkopf (12) abgewinkelte und in der eingestellten Lage mit dem Gegenanschlag (22) des Profilkopfes (12) zusammenwirkende Anschlagnase (28) und eine zum Kraftbegrenzerring (20) abgewinkelte und mit dem Anschlag (21) des Kraftbegrenzerrings (20) zusammenwirkende Anschlagnase (29) aufweist.

## Claims

1. Self-locking seat-belt retractor with a blocking device which can be activated in a vehicle-sensitive and/or seat-belt-sensitive manner, the seat-belt retractor having a first force-limiting device with a torsion bar (11) connected, on the one hand, to the seat-belt shaft (10) and, on the other hand, to a separate profiled head (12) which is to be blocked in a manner fixed on the housing by means of an activatable blocking element (17), and, as an additional force-limiting element for increasing the restraining force before and/or while the torsion bar (11) between the seat-belt shaft (10) and the profiled head (12) is effective, a rotatably arranged force limiter ring (20) being switched on and, after a rotational angle predetermined by its position, coming with a stop (21) to bear against a mating stop (22) of the profiled head (12) situated in the blocking position, **characterized in that** the force limiter ring (20) is fixed releasably on the assigned end side of the seat-belt shaft (10) and is released from the seat-belt shaft (10) by its stop (21) bearing against the mating stop (22) of the profiled head (12), and **in that** at least one deformation element (23) is arranged on the force limiter ring (20) and/or the seat-belt shaft (10), which deformation element is effective during the rotation of the seat-belt shaft (10) relative to the force limiter ring (20) and is supported between the force limiter ring (20) and the seat-belt shaft (10).

2. Seat-belt retractor according to Claim 1, **characterized in that** a clamping foot (23) which protrudes inwards to the seat-belt shaft (10) and, during the connection of seat-belt shaft (10) and force limiter ring (20), is held in a pocket (24) formed on the circumference of the seat-belt shaft (10) is arranged as the deformation element on the force limiter ring (20).

3. Seat-belt retractor according to Claim 1, **characterized in that** a clamping foot which protrudes outwards to the force limiter ring (20) and, during the connection of seat-belt shaft (10) and force limiter ring (20), is held in a pocket formed on the force limiter ring (20) is arranged as the deformation element on the seat-belt shaft (10).

4. Seat-belt retractor according to one of Claims 1 to 3, **characterized in that** the force limiter ring (20) is placed in a form-fitting manner on a step (25) formed on the end side of the seat-belt shaft (10), and the axial circumferential surface (26) of the step (25) forms the mating surface for the passage of the clamping foot (23).

5. Seat-belt retractor according to Claim 4, **characterized in that** the force limiter ring is composed of an inflexible material and is of such stable design that the force limiter ring (20) forms the abutment for the force occurring during the passage of the clamping foot (23).

6. Seat-belt retractor according to Claim 4, **characterized in that** the profiled head (12) engages over the force limiter ring (20) with an axial wall section and, as a result, forms the abutment for the force occurring during the passage of the clamping foot.

7. Seat-belt retractor according to one of Claims 4 to 6, **characterized in that** the clamping foot (23) is designed as a tongue which extends in the circumferential direction and, after its sliding out of the pocket (24), is supported radially against the force limiter ring (20).

8. Seat-belt retractor according to one of Claims 4 to 7, **characterized in that** two mutually opposite clamping feet (23) are arranged in a symmetrical arrangement.

9. Seat-belt retractor according to one of Claims 4 to 7, **characterized in that** a plurality of clamping feet are provided in a symmetrical arrangement.

10. Seat-belt retractor according to one of Claims 1 to 9, **characterized in that** the force limiter ring (20) is releasably caulked to the seat-belt shaft (10).

11. Seat-belt retractor according to one of Claims 1 to 9, **characterized in that** the force limiter ring (20) is connected to the seat-belt shaft (10) via predetermined breaking points.

12. Seat-belt retractor according to one of Claims 1 to 11, **characterized in that** a transmission ring (27) is arranged between the profiled head (12) and the force limiter ring (20) in order to set the stop angle of rotation, the said transmission ring having a stop lug (28), which is angled with respect to the profiled head (12) and, in the set position, interacts with the mating stop (22) of the profiled head (12), and a stop lug (29) which is angled with respect to the force limiter ring (20) and interacts with the stop (21) of the force limiter ring (20).

## Revendications

1. Rétracteur de ceinture de sécurité à blocage automatique, comportant un dispositif de blocage apte à être actionné de manière sensible au véhicule et/ou sensible à la ceinture de sécurité, le rétracteur de ceinture de sécurité étant muni d'un premier dispositif de limitation des forces avec une barre de torsion (11) reliée, d'une part, à l'arbre d'enroulement (10) et, d'autre part, à une tête profilée (12) séparée, destinée à être bloquée fermement au boîtier au moyen d'un organe de réglage (17) propre à être commandé, et une bague de limitation des forces (20), montée rotative, étant intercalée entre l'arbre d'enroulement (10) et la tête profilée (20) pour former un dispositif de limitation des forces supplémentaire pour augmenter la force de retenue avant et/ou pendant l'entrée en action de la barre de torsion (11), laquelle bague avec une butée (21) vient en contact, selon un angle de rotation prédéfini par la position de celle-ci, sur une contre-butée (22) de la tête profilée (12) située en position de blocage, **caractérisé en ce que** la bague de limitation des forces (20) est fixée de manière amovible sur la face frontale correspondante de l'arbre d'enroulement (10) et se détache de l'arbre d'enroulement (10) lorsqu'elle vient en appui avec sa butée (21) contre la contre-butée (22) de la tête profilée (12), et **en ce que** sur la bague de limitation des forces (20) et/ou l'arbre d'enroulement (10) est agencé au moins un organe de déformation (23), qui devient actif lorsque l'arbre d'enroulement (10) effectue un mouvement relatif de rotation par rapport à la bague de limitation des forces (20) et qui prend appui entre la bague de limitation des forces (20) et l'arbre d'enroulement (10).

2. Rétracteur de ceinture de sécurité selon la revendication 1, **caractérisé en ce que**, pour former l'organe de déformation sur la bague de limitation des forces (20), il est prévu un pied de serrage (23), qui est en saillie vers l'intérieur vers l'arbre d'enroulement (10) et qui, lorsque l'arbre d'enroulement (10) est relié à la bague de limitation des forces (20), est reçu dans une poche (24) réalisée sur le pourtour de l'arbre d'enroulement (10).

3. Rétracteur de ceinture de sécurité selon la revendication 1, **caractérisé en ce que**, pour former l'organe de déformation sur l'arbre d'enroulement (10), il est prévu un pied de serrage, qui est en saillie vers l'extérieur vers la bague de limitation des forces (20) et qui, lorsque l'arbre d'enroulement (10) est relié à la bague de limitation des forces (20), est reçu dans une poche réalisée sur la bague de limitation des forces (20).

4. Rétracteur de ceinture de sécurité selon l'une quelconque des revendications 1 à 3, **caractérisé en ce que** la bague de limitation des forces (20) est posée par conjugaison de forme sur une saillie (25), réalisée du côté frontal sur l'arbre d'enroulement (10), et la surface périphérique (26) axiale de la saillie (25) forme la surface complémentaire pour le passage du pied de serrage (23).

5. Rétracteur de ceinture de sécurité selon la revendication 4, **caractérisé en ce que** la bague de limitation des forces est réalisée dans un matériau non flexible et est conçue avec une stabilité telle que la bague de limitation des forces (20) forme un contre-appui pour la force générée lors du passage du pied de serrage (23).

6. Rétracteur de ceinture de sécurité selon la revendication 4, **caractérisé en ce que** la tête profilée (12) s'engage au-dessus de la bague de limitation des forces (20) avec une partie de paroi axiale et forme de ce fait le contre-appui pour la force générée lors du passage du pied de serrage.

7. Rétracteur de ceinture de sécurité selon l'une quelconque des revendications 4 à 6, **caractérisé en ce que** le pied de serrage (23) est conçu sous forme de languette qui s'étend dans le sens périphérique et qui, après avoir glissé hors de la poche (24), prend appui dans le sens radial contre la bague de limitation des forces (20).

8. Rétracteur de ceinture de sécurité selon l'une quelconque des revendications 4 à 7, **caractérisé en ce que** deux pieds de serrage (23) sont agencés l'un en regard de l'autre selon un agencement symétrique.

9. Rétracteur de ceinture de sécurité selon l'une quelconque des revendications 4 à 7, **caractérisé en ce qu'**une pluralité de pieds de serrage (23) est prévue dans un agencement symétrique.

10. Rétracteur de ceinture de sécurité selon l'une quelconque des revendications 1 à 9, **caractérisé en ce que** la bague de limitation des forces (20) est appliquée par matage, de manière amovible, sur l'arbre d'enroulement (10).

11. Rétracteur de ceinture de sécurité selon l'une quelconque des revendications 1 à 9, **caractérisé en ce que** la bague de limitation des forces (20) est reliée à l'arbre d'enroulement (10) par des zones destinées à rupture.

12. Rétracteur de ceinture de sécurité selon l'une quelconque des revendications 1 à 11, **caractérisé en ce que**, pour le réglage de l'angle de rotation de la butée, une bague de transmission (27) est agencée entre la tête profilée (12) et la bague de limitation des forces (20) et comporte un bec de butée (28), coudé vers la tête profilée (12) et coopérant, dans la position définie, avec la contre-butée (22) de la tête profilée (12), et un bec de butée (29), coudé vers la bague de limitation des forces (20) et coopérant avec la butée (21) de la bague de limitation des forces (20).
